# EUROPÄISCHE PATENTSCHRIFT

(11) **EP 2 829 380 B1**
(45) Veröffentlichungstag und Bekanntmachung des Hinweises auf die Patenterteilung: **20.12.2017**
(21) Anmeldenummer: 14170189.6
(22) Anmeldetag: 28.05.2014
(51) Int. Cl.: B29C 53/04

(54) **Biegemaschine zum Biegen von Werkstücken aus thermoplastischem Kunststoff**
Bending machine for bending workpieces made of thermoplastic
Cintreuse destiner à cintrer des pièces à usiner en thermoplastique

(30) Priorität: 22.07.2013 DE 202013103273 U
(43) Veröffentlichungstag der Anmeldung: 28.01.2015
(73) Patentinhaber: Wegener International GmbH, 52249 Eschweiler (DE)
(72) Erfinder: Dietrich, Michael, 52224 Stollberg (DE)
(74) Vertreter: Albrecht, Ralf

(56) Entgegenhaltungen:
- EP-A1- 0 456 121
- DE-A1- 3 521 698
- DE-A1- 4 020 763
- JP-A- S58 214 682
- US-A- 4 439 986

## Beschreibung

Die Erfindung betrifft eine Biegemaschine zum Biegen von Werkstücken aus thermoplastischem Kunststoff gemäß dem Oberbegriff des Anspruchs 1.

Biegemaschinen zum Biegen von plattenförmigen Werkstücken aus thermoplastischem Kunststoff weisen einen langgestreckten Maschinenrahmen auf, in den ein zu biegendes Werkstück horizontal eingelegt werden kann. Gewöhnlich befindet sich an einer Längsseite des Maschinenrahmens eine Biegeeinrichtung, die eine Klemmeinrichtung zum Festklemmen des nicht zu verbiegenden Teils des Werkstückes und eine schwenkbar gelagerte, leistenförmige Biegewange aufweist, mit der der umzubiegende Teil des Werkstückes durch Verschwenken der Biegewange mit Hilfe eines Schwenkantriebs aufwärts gebogen werden kann.

Hinter der Klemmeinrichtung sind eine Heizeinrichtung und eine Halteeinrichtung vorgesehen. Die Heizeinrichtung weist zwei übereinander angeordnete, sich horizontal erstreckende Heizschwerter auf, welche jeweils an Tragholmen angebracht sind. Die Tragholme sind jeweils mittels Betätigungseinrichtungen vertikal verfahrbar, so dass die Heizschwerter von beiden Seiten in Anlage an das Werkstück gebracht werden können. Die Heizschwerter werden mittels elektrischer Energie beheizt und sorgen bei Anlage an dem Werkstück für eine plastifizierte Biegelinie, die das Umbiegen eines Teils des Werkstückes um die Biegelinie in Biegerichtung ermöglicht. Typische Biegemaschine der gattungsgemäßen Art sind den DE 195 15 719 U, EP 0 425 724 A1, DE 92 14 576 U1, EP 0 426 075 A2 und DE 36 37 436 A1 zu entnehmen. Zur näheren Erläuterung dieser Gattung von Biegemaschinen wird auf den Inhalt dieser Dokumente Bezug genommen.

Zum Biegen insbesondere von thermoplastischen Verbundwerkstoffen sind ebenfalls gattungsgemäße Biegemaschinen bekannt, bei denen nach Plastifizierung der Biegelinie beide der Biegelinie benachbarten Teile des Werkstückes zeitgleich um einen Biegebalken herum gebogen werden. Dabei wirken als Schwenkantrieb Antriebsdruckzylinder direkt auf die Außenseiten der zu biegenden Teile des Werkstückes ein. Eine solche Biegemaschine ist der EP 0 456 121 A1 zu entnehmen.

Zum Verschwenken der Biegewangen von gattungsgemäßen Biegemaschinen sind Schwenkantriebe bekannt, die einen Elektromotor mit Getriebe aufweisen (vgl. EP 0 426 065 A2, DE 92 14 576 U1, EP 0 425 724 A1 und DE 36 37 436 A1). Solche Schwenkantriebe lassen eine präzise Einstellung und reproduzierbare Einhaltung des Schwenkwinkels zu. Allerdings sind solche Schwenkantriebe konstruktiv aufwändig und folglich teuer. Aus diesem Grund sind Schwenkantriebe vorgesehen worden, die eine Mehrzahl, über die Länge der Biegewange gleichmäßig verteilte Antriebsdruckzylinder aufweisen (vgl. DE 295 15 719 U1). Solche Antriebsdruckzylinder haben jeweils eine ein- und ausfahrbare Kolbenstange und einen daran befestigten Kolben, der das Innere des Antriebsdruckzylinders in einen ersten und einen zweiten Druckraum aufteilt. Bei Druckbeaufschlagung des ersten Druckraums wird die Kolbenstange in eine einen Biegevorgang bewirkbaren Richtung bewegt. In der Regel wird sie dabei aus dem Zylinder ausgefahren. Für die Bewegung der Kolbenstange in Gegenrichtung ist eine Rückstelleinrichtung vorgesehen, die die Kolbenstange nach dem Biegevorgang in eine Ausgangsposition zurückbewegt.

Als Druckmittel für die Antriebsdruckzylinder - wie auch für die Druckzylinder zur Bewegung der Heizschwerter - wird ausnahmslos Druckluft verwendet, da in Betrieben, in denen solche Biegemaschinen eingesetzt werden, in der Regel Druckluft über eine Druckluftquelle zur Verfügung steht. Alternativ kann die Biegemaschine selbst mit einem geeigneten Kompressor zur Erzeugung von Druckluft versehen sein.

Der konstruktive Aufwand bei Schwenkantrieben mittels Antriebsdruckzylinder ist deutlich geringer als bei Schwenkantrieben unter Verwendung von Elektromotoren. Allerdings haben Antriebsdruckzylinder den Nachteil, dass ein gewünschter Biegewinkel nur schwierig zu verwirklichen und zu reproduzieren ist. Es ist zwar bekannt, mechanische Anschläge vorzusehen. Verbreitet ist es auch, die aktuelle Position der Biegewange sensorisch, beispielsweise mittels Drehwinkelgeber, Schalter oder dergleichen, zu erfassen und die Druckluftzufuhr zu beenden, wenn eine gewünschte Position erreicht ist. Da einerseits Luft ein kompressibles Medium ist und andererseits die auf die Biegewange einwirkenden Kräfte, hier insbesondere das Eigengewicht und der Biegewiderstand des zu biegenden Werkstückes, unterschiedlich sind, ist die präzise Verwirklichung eines gewünschten Biegewinkels in reproduzierbarer Weise kaum möglich, so dass das Biegeresultat häufig nicht befriedigend ist.

Der Erfindung liegt die Aufgabe zugrunde, den Schwenkantrieb für eine Biegemaschine der gattungsgemäßen Art derart zu gestalten, dass mit vergleichbar einfachen Mitteln ein reproduzierbares Biegeergebnis erzielbar ist.

Diese Aufgabe wird erfindungsgemäß dadurch gelöst, dass der Antriebsdruckzylinder bzw. zweckmäßigerweise die mehreren, gleich ausgebildeten Antriebsdruckzylinder jeweils als hydropneumatischer Antriebsdruckzylinder mit dem ersten Druckraum als Pneumatikdruckraum und dem zweiten Druckraum als Hydraulikdruckraum ausgebildet ist und dass jeweils der Pneumatikdruckraum mit der Pneumatikquelle verbindbar ist und sich an den Hydraulikdruckraum bzw. die Hydraulikdruckräume ein Hydraulikteil anschließt, das beim Biegevorgang aufgrund der Druckbeaufschlagung des Pneumatikdruckraums bzw. der Pneumatikdruckräume als Hydraulikdrossel wirksam ist, wobei das Hydraulikteil zumindest ein schaltbares Sperrventil aufweist, mit dem der Ausfluss von Hydraulikflüssigkeit aus dem Hydraulikdruckraum bzw. den Hydraulikdruckräumen sperrbar ist.

Der Grundgedanke der Erfindung besteht darin, den Biegevorgang nach wie vor durch Verbindung mit einer Pneumatikdruckquelle zu bewirken, jedoch die Bewegung der Kolbenstange des Antriebsdruckzylinders bzw. der Antriebsdruckzylinder hydraulisch zu drosseln und bei Erreichen des gewünschten Biegewinkels hydraulisch zu sperren. Dies wird mit Hilfe eines Hydraulikteils erreicht, das eine Drosselwirkung entfaltet und mit zumindest einem Sperrventil versehen ist. Durch die Drosselwirkung des Hydraulikteils entsteht eine gleichmäßige Schwenkbewegung, die weitgehend unabhängig ist vom Druck der Pneumatikdruckquelle und von Gewicht und Biegewiderstand des zu biegenden Werkstückes. Mit Hilfe des Sperrventils bzw. der Sperrventile kann ein bestimmter Biegewinkel reproduzierbar erzielt werden, weil die in dem Hydraulikdruckteil vorhandene Hydraulikflüssigkeit inkompressibel ist. Der jeweilige Biegewinkel kann mit Hilfe von elektronischen Sensoren erfasst und zur Steuerung des bzw. der Sperrventile verwendet werden. Auch wenn die erfindungsgemäße Hydropneumatik aufwändiger ist als ein rein pneumatischer Schwenkantrieb, ist der Aufwand doch deutlich geringer als bei elektromotorischen Schwenkantrieben.

Für die Verwirklichung der Erfindung ist es unerheblich, ob ein Antriebsdruckzylinder oder - was bei langgestreckten Biegewangen oder Werkstücken vorzuziehen ist - mehrere Antriebsdruckzylinder vorhanden sind und ob der bzw. die Antriebsdruckzylinder auf eine Biegewange (vgl. DE 295 15 719 U1) oder direkt auf das Werkstück einwirken (vgl. EP 0 456 121 A1).

Was die Rückstelleinrichtung betrifft, ist es nicht erforderlich, dass hierfür die erfindungsgemäß verwendeten Druckmittel herangezogen werden. So kann die Rückstelleinrichtung beispielsweise aus einer Feder bestehen, die bei Druckentlastung des ersten Druckraums wirksam wird. Erfindungsgemäß ist jedoch vorgesehen, dass das Hydraulikteil als Rückstelleinrichtung zumindest einen Druckmittelwandler mit einem mit dem Hydraulikteil verbundenen Hydraulikdruckraum und durch einen Kolben getrennt einem Pneumatikdruckraum aufweist, der zwecks Rückstellung des Antriebsdruckzylinders bzw. der Antriebsdruckzylinder mit der Pneumatikdruckquelle verbindbar ist. Dabei sollte der Pneumatikdruckraum beim Biegevorgang mit der Atmosphäre verbindbar sein, damit sich beim Biegevorgang in ihm kein der Bewegung der Kolbenstangen entgegengesetzt wirkender Druck aufbaut.

In weiterer Ausgestaltung der Erfindung ist vorgesehen, dass das Hydraulikteil zumindest ein Drosselventil aufweist, über das die Drosselwirkung einstellbar ist. Das Drosselventil kann auch als Drossel-Rückschlagventil ausgebildet sein, das derart eingebaut ist, dass dessen Rückschlagventil beim Biegevorgang sperrt, umgekehrt aber beim Rückstellvorgang öffnet.

Sofern mehrere Antriebsdruckzylinder vorhanden sind, ist es zweckmäßig, dass das Hydraulikteil aus jeweils einem Antriebsdruckzylinder zugeordneten Hydraulikteilabschnitt zusammengesetzt ist, wobei jeder Hydraulikteilabschnitt gemeinsam an einen einzigen Druckmittelwandler angeschlossen sind. Zwar ist es prinzipiell möglich, jedem Antriebsdruckzylinder einen Druckmittelwandler zuzuordnen. Dies würde jedoch den Aufwand erheblich vergrößern. Grundsätzlich besteht auch hier die Möglichkeit, nur ein einziges Sperrventil zur gemeinsamen Sperrung der Hydraulikteilabschnitte vorzusehen. Es hat sich jedoch als zweckmäßig erwiesen, in jedem Hydraulikteilabschnitt ein Sperrventil vorzusehen und - soweit vorhanden - auch das schon oben erwähnte Drosselventil.

In der Zeichnung ist die Erfindung anhand von Ausführungsbeispielen näher veranschaulicht. Es zeigen:
- Figur 1: eine stirnseitige Ansicht der erfindungsgemäßen Biegemaschine, und
- Figur 2: ein Hydraulikschaltbild der ersten Variante des Schwenkantriebs der Biegemaschine gemäß Figur 1.

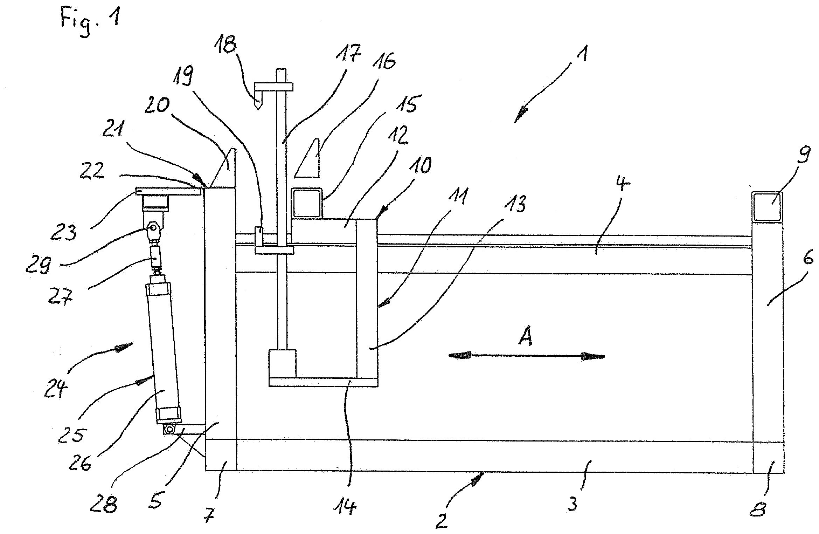

Die in Figur 1 dargestellte Biegemaschine 1 weist einen quaderförmigen Maschinenrahmen 2 auf, dessen Stirnseite in Figur 1 zu sehen ist. Er ist senkrecht zur Zeichnungsebene lang gestreckt, so dass sich die Längsrichtung des Maschinenrahmens 2 in dieser Richtung erstreckt. Zu sehen ist ein unterer Querholm 3 und ein oberer Querholm 4, der von einem vorderseitigen Vertikalholm 5 und einem rückseitigen Vertikalholm 6 getragen wird. Der untere Querholm 3 ist über einen vorderseitigen unteren Längsholm 7 mit dem vorderseitigen Vertikalholm 5 und über einen rückseitigen unteren Längsholm 8 mit dem rückseitigen Vertikalholm 6 verbunden. Beide unteren Längsholme 7, 8 erstrecken sich senkrecht zur Zeichnungsebene über die gesamte Länge der Biegemaschine 1. Im oberen Bereich sind ebenfalls Längsholme vorhanden, von denen hier nur der rückseitige obere Längsholm 9 zu sehen ist. Sämtliche vier Längsholme 7, 8 verlaufen horizontal bis zur anderen Stirnseite der Biegemaschine 1, wo sie mit den dortigen Vertikalholmen und Querholmen verbunden sind, die an dieser Stirnseite in gleicher Anordnung vorhanden sind wie an der hier dargestellten Stirnseite.

Auf der Oberseite der oberen Querholme 4 ist ein Wagen 10 in den Richtungen des Doppelpfeils A verschieblich geführt. An der hier sichtbaren Stirnseite hat der Wagen 10 einen U-förmigen Rahmen 11 mit einem oberen Horizontalschenkel 12 und einem damit durch einen Vertikalholm 13 verbundenen unteren Horizontalschenkel 14. Ein entsprechender Rahmen ist deckungsgleich an der anderen Stirnseite vorgesehen. Beide Rahmen 11 sind über einen sich horizontal und parallel zu dem rückseitigen oberen Längsholm 9 erstreckenden Klemmholm 15 verbunden, so dass die beiden Rahmen 11 mit dem Klemmholm 15 eine Einheit bilden.

Oberhalb des Klemmholms 15 verläuft in gleicher Länge und parallel zu ihm eine im Querschnitt dreiecksförmige Klemmleiste 16. Sie ist über hier nicht näher dargestellte Pneumatikdruckzylinder und Vertikalführungen gegenüber dem Klemmholm 15 anhebbar und in Richtung auf ihn absenkbar. Die Klemmleiste 16 ist Teil des Wagens 10, bleibt also bei Bewegung des Wagens 10 immer oberhalb des Klemmholms 15.

An dem unteren Horizontalschenkel 14 des Rahmens 11 ist eine sich vertikal nach oben erstreckende Führungsstange 17 befestigt. Eine entsprechende Führungsstange weist auch der an der anderen Stirnseite vorhandene Rahmen auf. An den Führungsstangen 17 sind ein oberes Heizschwert 18 und ein unteres Heizschwert 19 vertikal verschieblich geführt. Sie erstrecken sich parallel zu dem Klemmholm 15 und der Klemmleiste 16 über die gesamte Länge der Biegemaschine vom Rahmen 11 zu dem anderen Rahmen. Über hier nicht näher dargestellte Pneumatikdruckzylinder können die Heizschwerter 18, 19 vertikal verfahren werden, d.h. aus den gezeichneten Ausgangspositionen können das obere Heizschwert 18 nach unten und das untere Heizschwert 19 nach oben verfahren werden. Die Heizschwerter 18, 19 sind mit elektrischer Energie auf eine Temperatur erhitzbar, mit der es möglich ist, Werkstücke aus thermoplastischem Kunststoff von beiden Seiten linienförmig zu plastifizieren. Aufgrund der Befestigung an den unteren Horizontalschenkeln 14 sind die Führungsstangen 17 und damit die beiden Heizschwerter 18, 19 mit dem Wagen 10 in den Richtungen des Doppelpfeils A beweglich.

Die Oberseite des durch den vorderseitigen Vertikalholm 5 verdeckten, vorderseitigen oberen Längsholm bildet zusammen mit einer oberhalb dieser Oberseite angeordneten Klemmleiste 20 eine gerätefeste Klemmeinrichtung 21. Die Oberseite des vorderseitigen oberen Längsholms liegt auf gleicher Höhe wie die Oberseite des Klemmholms 15 am Wagen 10. Die Klemmleiste 20 ist mittels hier nicht näher dargestellter Pneumatikdruckzylinder vertikal verfahrbar. Die Klemmleiste 20 erstreckt sich senkrecht zur Zeichnungsebene und parallel zu dem gegenüberliegenden Längsholm in etwa über die gesamte Länge der Biegemaschine 1. In Offenstellung kann eine Kunststoffplatte zwischen die Klemmleiste 20 und die Oberseite des gegenüberliegenden Längsholms eingespannt werden.

An der Vorderkante des vorderseitigen oberen Längsholms ist über ein sich horizontal erstreckendes Schwenkgelenk 22 eine Biegewange 23 angebracht. Sie erstreckt sich im Wesentlichen über die Breite des Maschinenrahmens 2. In der gezeigten Ausgangsstellung ist ihre Oberfläche waagerecht und bündig mit der Oberseite des vorderseitigen oberen Längsholms. Sie kann aus dieser Stellung in eine vertikale Stellung verschwenkt werden.

Für die Verschwenkung der Biegewange 23 ist ein Schwenkantrieb 24 vorgesehen. Zu diesem Schwenkantrieb 24 gehören drei Antriebsdruckzylinder, die gleichmäßig über die Länge (senkrecht zur Zeichnungsebene) der Biegewange 23 verteilt sind und von denen hier nur der in dieser Ansicht erste Antriebsdruckzylinder 25 zu sehen ist. Jeder Antriebsdruckzylinder 25 weist ein Zylindergehäuse 26 auf, aus dem nach oben eine Kolbenstange 27 herausragt. Die Zylindergehäuse 26 sitzen untenseitig jeweils gelenkig auf einer Stützkonsole 28, welche am Maschinenrahmen 2 befestigt ist. Die Kolbenstangen 27 sind über Gelenke 29 mit der Unterseite der Biegewange 23 verbunden. Durch Ausfahren der Kolbenstangen 27 kann die Biegewange 23 aus der gezeigten Ausgangsposition um einen gewünschten Biegewinkel verschwenkt werden.

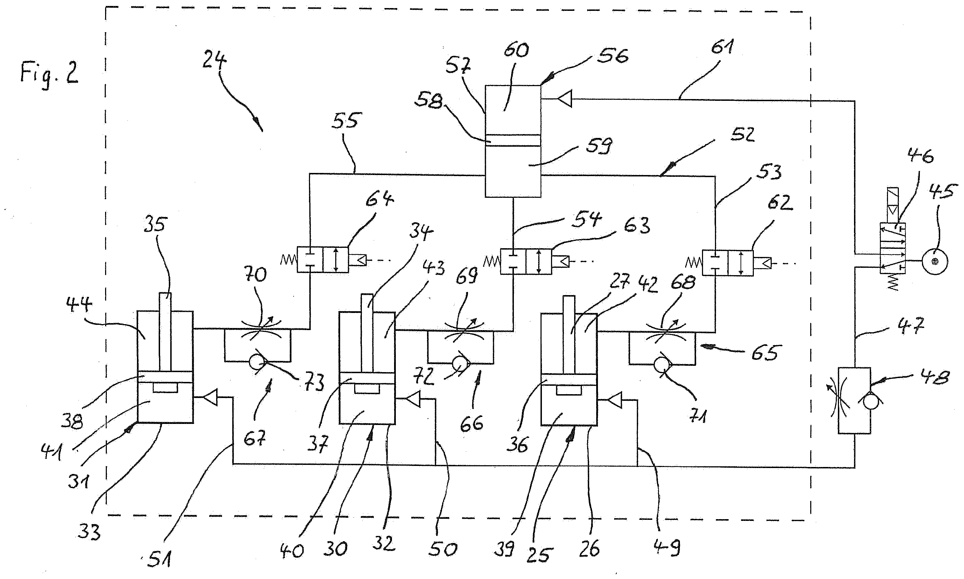

Das Hydraulikschaltbild gemäß Figur 2 zeigt die drei Antriebsdruckzylinder 25, 30, 31 in schematischer Darstellung mit ihren Zylindergehäusen 26, 32, 33 und den nach oben jeweils herausragenden Kolbenstangen 27, 34, 35. Die untenseitige Abstützung der Zylindergehäuse 26, 32, 33 an den Stützkonsolen 28 ist ebenso weggelassen wie die gelenkige Verbindung der freien Enden der Kolbenstangen 27, 34, 35 an der Biegewange 23. Die in die Zylindergehäuse 26, 32, 33 hineinragenden Enden der Kolbenstangen 27, 34, 35 sind mit Kolben 36, 37, 38 versehen, die die Innenräume der Zylindergehäuse 26, 32, 33 jeweils in einen ersten Druckraum 39, 40, 41 und in einen kolbenstangenseitigen zweiten Druckraum 42, 43, 44 aufteilen.

Die Druckmittelversorgung der Antriebsdruckzylinder 25, 30, 31 erfolgt primär von einer Druckluftquelle 45, die extern als Druckluftsystem eines Betriebes, an das die Biegemaschine 1 angeschlossen ist, oder als zur Biegemaschine 1 gehörender Kompressor mit Druckluftspeicher ausgebildet sein kann. In Strömungsrichtung hinter der Druckluftquelle 45 befindet sich ein Steuerventil 46, das elektromagnetisch von einem Steuerpult geschaltet werden kann.

An das Steuerventil 46 schließt sich eine zentrale Druckluftleitung 47 an, in der ein Drossel-Rückschlagventil 48 angeordnet ist. Die zentrale Druckluftleitung 47 teilt sich danach auf in drei Druckluftleitungsabschnitte 49, 50, 51, welche jeweils mit dem zugehörigen ersten Druckraum 39, 40, 41 der Antriebsdruckzylinder 25, 30, 31 verbunden sind.

Die zweiten Druckräume 42, 43, 44 sind mit einem insgesamt mit 52 bezeichneten Hydraulikteil verbunden. Das Hydraulikteil 52 hat für jeden Antriebsdruckzylinder 25, 30, 31 einen Hydraulikleitungsabschnitt 53, 54, 55, die jeweils zu dem zugehörigen zweiten Druckraum 42, 43 ,44 hin offen sind und wie diese mit Hydrauliköl gefüllt sind. An den anderen Enden münden die Hydraulikleitungsabschnitte 53, 54, 55 in einen Druckmittelwandler 56, der ein Zylindergehäuse 57 aufweist, in dem ein Trennkolben 58 vertikal verschieblich angeordnet ist. Der Trennkolben 58 teilt das Zylindergehäuse 57 in einen mit Hydrauliköl gefüllten Hydraulikdruckraum 59 und einen darüber angeordneten Pneumatikdruckraum 60 auf. Dieser ist über eine Pneumatikleitung 61 mit dem Steuerventil 46 verbunden.

In jedem Hydraulikleitungsabschnitt 53, 54, 55 ist ein Sperrventil 62, 63, 64 angeordnet, mit dem der Durchfluss geöffnet oder gesperrt werden kann. Zwischen den Antriebsdruckzylindern 25, 30, 31 und den Sperrventilen 62, 63, 63 ist jeweils ein Drossel-Rückschlagventil 65, 66, 67 angeordnet, das im Hauptweg eine Drossel 68, 69, 70 und im Bypass ein Rückschlagventil 71, 72, 73 aufweist.

Ein Biegevorgang wird dadurch eingeleitet, dass die Druckluftquelle 45 über das Steuerventil 46 mit der zentralen Druckluftleitung 47 verbunden wird, wie dies in Figur 2 dargestellt ist. Die Druckluft strömt dann über die Druckluftleitungsabschnitte 49, 50, 51 in die ersten Druckräume 39, 40, 41 mit der Folge, dass die Kolben 36, 37, 38 und damit die Kolbenstangen 27, 34, 35 angehoben werden, sich also die ersten Druckräume 39, 40, 41 vergrößern und die zweiten Druckräume 42, 43, 44 verkleinern. Hierdurch wird das Hydrauliköl in den zweiten Druckräumen 42, 43, 44 in die Hydraulikleitungsabschnitte 53, 54, 55 verdrängt und durchströmt wegen der Sperrung durch die Rückschlagventile 71, 72, 73 die Drosseln 68, 69, 70. Dabei befinden sich die Sperrventile 62, 63, 64 - anders als dargestellt - in der Offenstellung. Das Hydrauliköl strömt dann weiter in den Hydraulikdruckraum 59 des Druckmittelwandlers 56 und hebt den darin geführten Trennkolben 58 an. Hierdurch wird die Luft in dem Pneumatikdruckraum 60 verdrängt und strömt über die Pneumatikleitung 61 und das Steuerventil 46 nach außen in die freie Atmosphäre. Die Drosselwirkung der Drosseln 68, 69, 70 bewirkt unabhängig von Druckschwankungen in der zentralen Druckluftleitung 47 und vom an der Biegewange 23 wirkenden Widerständen eine gleichmäßige Anhebung der Kolben 36, 37, 38 und damit eine ebenso gleichmäßige Verschwenkung der Biegewange 23.

In der gezeigten Darstellung ist der Biegevorgang soeben abgeschlossen, denn die Sperrventile 62, 63, 64 sind in Sperrstellung geschaltet. Die Steuerung der Sperrventile 62, 63, 64 kann automatisch dadurch erfolgen, dass ein bestimmter Biegewinkel der Biegewange 23 eingegeben wird. Durch Überwachung des jeweiligen Biegewinkels der Biegewange 23 werden die Sperrventile 62, 63, 63 dann geschlossen, wenn der eingestellte Biegewinkel erreicht ist. Aufgrund der Inkompressibilität des Hydrauliköls wird der gewünschte Biegewinkel in beliebig reproduzierbarer Weise erhalten. Die fortgesetzte Luftdruckbeaufschlagung der ersten Druckräume 39, 40, 41 sorgt für eine stabilere Endstellung der Kolben 36, 37, 38 und damit letztendlich der Biegewange 23.

Für die Rückstellung der Kolben 36, 37, 38 und damit der Biegewange 23 in die Ausgangsstellung wird das Steuerventil 46 so geschaltet, dass einerseits die Pneumatikleitung 61 mit der Druckluftquelle 45 verbunden und andererseits die zentrale Druckluftleitung 47 belüftet, d.h. zur Atmosphäre hin geöffnet wird. Gleichzeitig werden die Sperrventile 62, 63, 64 wieder in Offenstellung geschaltet. Die in dem Pneumatikdruckraum 60 einströmende Druckluft verschiebt den Trennkolben 58 nach unten und verdrängt das in dem Hydraulikdruckraum 59 befindliche Hydrauliköl in die Hydraulikleitungsabschnitte 53, 54, 55. Das Hydrauliköl durchströmt die Sperrventile 62, 63, 64 und über die Bypässe die nun offenen Rückschlagventile 71, 72, 73 und gelangt in die zweiten Druckräume 42, 43, 44. Dabei werden die Kolben 36, 37, 38 nach unten bewegt, wobei die in den ersten Druckräumen 39, 40, 41 befindliche Luft verdrängt wird und gedrosselt durch das Drossel-Rückschlagventil 48 nach außen strömt. Die Rückstellung wird beendet durch Schalten der Sperrventile 62, 63, 64 in Sperrstellung.

Ein Biegevorgang mit der Biegemaschine 1 gemäß Figur 1 gestaltet sich wie folgt.

Zunächst wird der Wagen 10 von einem Bedienpult her in die gezeigte vordere Endstellung gebracht, um für die Steuereinrichtung eine Null-Lage zu definieren. Die Klemmleisten 16, 20 befinden sich in einer angehobenen Ausgangsstellung. Ferner wird die Biegewange 23 gegenüber der in Figur 1 gezeigten Stellung um 90° nach oben verschwenkt, um einen Anschlag zu bilden. Es kann dann eine Kunststoffplatte von rechts zunächst zwischen die Klemmleiste 16 und den Klemmholm 15 und dann weiter nach vorn zwischen die Klemmleiste 20 und den darunter befindlichen vorderseitigen oberen Längsholm eingeschoben werden, bis sie mit ihrer Vorderkante an der Biegewange 23 zur Anlage kommt.

In der Steuereinrichtung wird nun der Abstand eingegeben, in dem die Biegelinie zur an der Biegewange 23 anliegenden freien Kante der Kunststoffplatte zu liegen kommen soll. Der weitere Ablauf wird dann entweder von Hand, also halbautomatisch, oder durch entsprechende Programmierung der Steuereinrichtung vollautomatisch gesteuert.

Zunächst wird die Kunststoffplatte in ihrer Stellung dadurch fixiert, dass die Klemmleiste 20 mit Vorspannung auf die Kunststoffplatte abgesenkt und gegen den darunter befindlichen Längsholm gepresst wird. Anschließend wird der Wagen 10 bei angehobener Klemmleiste 16 durch entsprechende Ansteuerung eines hier nicht näher gezeigten Positionierantrieb nach hinten, also von der Klemmleiste 20 weg verfahren, und zwar um einen solchen Betrag, dass die Heizschwerter 18, 19 nach dem Anhalten des Wagens 10 oberhalb der vorgesehenen Biegelinie zu stehen kommen. Die Kunststoffplatte wird dann durch Absenken der Klemmleiste 16 in Richtung auf den Klemmholm 15 festgeklemmt. Gleichzeitig werden die beiden Heizschwerter 12, 13 einander derart angenähert, bis sie an der Oberseite bzw. der Unterseite der Kunststoffplatte zur Anlage gekommen sind. Sie erhitzen dann den Kunststoff im Bereich der vorgesehenen Biegelinie so stark, dass er linienförmig plastifiziert und biegsam wird.

Wenn die Biegelinie genügend stark erhitzt ist, wird die Klemmleiste 20 der Klemmeinrichtung 21 angehoben. Nach Zurückschwenken der Biegewange 23 in die gezeigte Ausgangsstellung wird der Wagen 10 durch entsprechende Ansteuerung des Positionierantriebes wieder in Richtung auf die Biegewange 23 verfahren, wobei die Kunststoffplatte wegen der Fixierung zwischen der Klemmleiste 16 und dem Klemmholm 15 mitgenommen wird. Gleichzeitig werden die Heizschwerter 12, 13 von der Kunststoffplatte gelöst und so weit nach oben bzw. nach unten verfahren, dass sie beim weiteren Vorfahren des Wagens 10 nicht mit der Klemmeinrichtung 21 kollidieren können. Der horizontale Abstand zwischen den Heizschwertern 12, 13 und der Klemmleiste 16 und dem Klemmholm 15 ist so bemessen, dass die erhitzte Biegelinie bei Erreichen der vorderen Endstellung des Wagens 10 etwa oberhalb des Schwenkgelenks 22 zu liegen kommt.

Anschließend wird die Klemmeinrichtung 21 durch Absenken der Klemmleiste 20 zugefahren und damit die Kunststoffplatte festgeklemmt. Dann werden die Antriebsdruckzylinder 25, 30, 31 zwecks Einleitung des Biegevorgangs in der vorbeschriebenen Weise angesteuert, so dass die Biegewange 23 aus der in Figur 1 dargestellten Ausgangslage hochgeschwenkt wird. Hierdurch wird der auf der Biegewange 23 aufgeschobene Teil der Kunststoffplatte entsprechend hochgebogen, wobei durch geeignete Eingabe an die Steuereinrichtung jeder beliebige Biegewinkel einstellbar ist.

Unmittelbar nach Festklemmen der Kunststoffplatte an der Klemmeinrichtung 21, also noch während des Biegevorgangs, wird die Verklemmung der Kunststoffplatte zwischen Klemmholm 15 und Klemmleiste 16 wieder gelöst und der Wagen 10 mittels des Positionierzylinders nach hinten verfahren, bis die Heizschwerter 12, 13 wieder mit der nächsten vorgesehenen Biegelinie fluchten. Der Abstand zur ersten Biegelinie kann durch entsprechende Eingabe an die Steuereinrichtung festgelegt werden, d.h. dieser Abstand kann derselbe sein wie beim ersten Biegevorgang, es kann jedoch auch ein anderer Abstand vorgegeben werden. Nach Anhalten des Wagens 10 wird die Kunststoffplatte durch Absenken der Klemmleiste 16 festgeklemmt und werden die Heizschwerter 12, 13 von oben bzw. von unten an die Oberflächen der Kunststoffplatte zur Anlage gebracht.

Die Ausbildung einer weiteren Biegelinie erfolgt somit während des Biegeund Aushärtevorgangs an der vorangegangenen ersten Biegelinie. Wenn dieser Vorgang abgeschlossen ist und die neue Biegelinie hinreichend erhitzt ist, wiederholt sich der vorbeschriebene Ablauf, d.h. nach Öffnen der Klemmeinrichtung 21 wird der Wagen 10 bei abgesenkter Klemmleiste 16 in Richtung auf die Biegewange 23 verfahren, wobei die Heizschwerter 12, 13 von der Kunststoffplatte wegbewegt werden. Nach Erreichen der vorderen Endstellung des Wagens 10 schließt sich ein weiterer Biegevorgang in der vorbeschriebenen Weise an. Auf diese Weise kann - wenn gewünscht - ein geschlossener Hohlkörper gebildet werden, dessen einzige offene Stelle ein Schlitz ist, der anschließend von einer entsprechenden Schweißeinrichtung geschlossen werden kann.

## Patentansprüche

1. Biegemaschine zum Biegen von Werkstücken aus thermoplastischem Kunststoff mit einer Biegeeinrichtung, die eine Heizeinrichtung (18, 19) zur Plastifizierung einer Biegelinie am Werkstück und einen mit einer Pneumatikdruckquelle (45) verbindbaren Schwenkantrieb (24) zur Verschwenkung eines Teils des Werkstückes um die Biegelinie aufweist, der zumindest einen Antriebsdruckzylinder (25, 30, 31) mit ein- und ausfahrbarer Kolbenstange (27, 34, 35) und einem daran befestigten Kolben (36, 37, 38) aufweist, der das Innere des Antriebsdruckzylinders (25, 30, 31) in einen ersten Druckraum (39, 40, 41), bei dessen Druckbeaufschlagung die Kolbenstange (27, 34, 35) in eine einen Biegevorgang bewirkbaren Richtung bewegt wird, und einen zweiten Druckraum (42, 43, 44) aufteilt, wobei die Druckbeaufschlagung des ersten Druckraums (39, 40, 41) mittels Pneumatikdruck bewirkbar ist und wobei dem Antriebsdruckzylinder (25, 30, 31) eine Rückstelleinrichtung zur Bewegung der Kolbenstange (27, 34, 35) in Gegenrichtung zugeordnet ist, **dadurch gekennzeichnet, dass** der Antriebsdruckzylinder bzw. die Antriebsdruckzylinder (25, 30, 31) jeweils als hydropneumatischer Antriebsdruckzylinder (25, 30, 31) mit dem ersten Druckraum (39, 40, 41) als Pneumatikdruckraum und dem zweiten Druckraum (42, 43, 44) als Hydraulikdruckraum ausgebildet ist und dass jeweils der Pneumatikdruckraum mit der Pneumatikdruckquelle (45) verbindbar ist und sich an den Hydraulikdruckraum bzw. die Hydraulikdruckräume ein Hydraulikteil (52) anschließt, das beim Biegevorgang aufgrund der Druckbeaufschlagung des Pneumatikdruckraums bzw. der Pneumatikdruckräume als Hydraulikdrossel (65, 66, 67) wirksam ist, wobei das Hydraulikteil (52) zumindest ein schaltbares Sperrventil (62, 63, 64) aufweist, mit dem der Ausfluss von Hydraulikflüssigkeit aus dem Hydraulikdruckraum bzw. den Hydraulikdruckräumen sperrbar ist.

2. Biegemaschine nach Anspruch 1, **dadurch gekennzeichnet, dass** das Hydraulikteil (52) als Rückstelleinrichtung zumindest einen Druckmittelwandler (56) mit einem mit dem Hydraulikteil (52) verbundenen Hydraulikdruckraum (59) und durch einen Kolben (58) getrennt einem Pneumatikdruckraum (60) aufweist, der zwecks Rückstellung des Antriebsdruckzylinders bzw. der Antriebsdruckzylinder (25, 30, 31) mit der Pneumatikdruckquelle (45) verbindbar ist.

3. Biegemaschine nach Anspruch 1 oder 2, **dadurch gekennzeichnet, dass** das Hydraulikteil (52) zumindest ein Drosselventil (65, 66, 67) aufweist, über das die Drosselwirkung einstellbar ist.

4. Biegemaschine nach Anspruch 3, **dadurch gekennzeichnet, dass** das Drosselventil als Drossel-Rückschlagventil (65, 66, 67) ausgebildet ist, das derart eingebaut ist, dass dessen Rückschlagventil (71, 72, 73) beim Biegevorgang sperrt.

5. Biegemaschine nach Anspruch 3 oder 4, **dadurch gekennzeichnet, dass** das Drosselventil (65, 66, 67) zwischen Hydraulikdruckraum und Sperrventil (62, 63, 64) angeordnet ist.

6. Biegemaschine nach einem der Ansprüche 1 bis 5, **dadurch gekennzeichnet, dass** mehrere Antriebsdruckzylinder (25, 30, 31) vorhanden sind und das Hydraulikteil (52) aus jeweils einem Antriebsdruckzylinder (25, 30, 31) zugeordneten Hydraulikteilabschnitt (53, 54, 55) zusammengesetzt ist, die gemeinsam an einen Druckmittelwandler (52) angeschlossen sind.

7. Biegemaschine nach Anspruch 6, **dadurch gekennzeichnet, dass** jeder Hydraulikteilabschnitt (53, 54, 55) ein Sperrventil, ggf. auch ein Drosselventil (65, 66, 67) aufweist.

## Claims

1. A bending machine for bending workpieces made of thermoplastic material, comprising a bending device which has a heating device (18, 19) for plasticizing a bending line on the workpiece and a swivel drive (24) that can be connected to a pneumatic pressure source (45) for swivelling a part of the workpiece about the bending line, which swivel drive has at least one drive pressure cylinder (25, 30, 31) with a piston rod (27, 34, 35) that can be retracted and extended and a piston (36, 37, 38) that is fastened to the latter, which piston divides the interior of the drive pressure cylinder (25, 30, 31) into a first pressure chamber (39, 40, 41) in which, when said first pressure chamber is pressurised, the piston rod (27, 34, 35) is moved in a direction that can bring about a bending process, and a second pressure chamber (42, 43, 44), the pressurisation of the first pressure chamber (39, 40, 41) being able to be brought about by means of pneumatic pressure, and a re-set device for moving the piston rod (27, 34, 35) in the opposite direction being assigned to the drive pressure cylinder (25, 30, 31), **characterised in that** the drive pressure cylinder or the drive pressure cylinders (25, 30, 31) is or are respectively in the form of a hydropneumatic drive pressure cylinder (25, 30, 31) with the first pressure chamber (39, 40, 41) as a pneumatic pressure chamber and the second pressure chamber (42, 43, 44) as a hydraulic pressure chamber, and that the pneumatic pressure chamber can respectively be connected to the pneumatic pressure source (45) and a hydraulic part (52) adjoins the hydraulic pressure chamber or the hydraulic pressure chambers, which hydraulic part acts as a hydraulic throttle (65, 66, 67) during the bending process due to the pressurisation of the pneumatic pressure chamber or the pneumatic pressure chambers, the hydraulic part (52) having at least one switchable check valve (62, 63, 64) with which the outflow of hydraulic fluid from the hydraulic pressure chamber or the hydraulic pressure chambers can be blocked.

2. The bending machine according to Claim 1, **characterised in that** the hydraulic part (52), as a re-set device, has at least one pressure converter (56) with a hydraulic pressure chamber (59) connected to the hydraulic part (52) and, separated by a piston (58), a pneumatic pressure chamber (60) which can be connected to the pneumatic pressure source (45) for the purpose of re-setting the drive pressure cylinder or the drive pressure cylinders (25, 30, 31).

3. The bending machine according to Claim 1 or 2, **characterised in that** the hydraulic part (52) has at least one throttle valve (65, 66, 67) by means of which the throttle effect can be set.

4. The bending machine according to Claim 3, **characterised in that** the throttle valve is in the form of a throttle/non-return valve (65, 66, 67) which is fitted such that its non-return valve (71, 72, 73) blocks during the bending process.

5. The bending machine according to Claim 3 or 4, **characterised in that** the throttle valve (65, 66, 67) is disposed between the hydraulic pressure chamber and the check valve (62, 63, 64).

6. The bending machine according to any of Claims 1 to 5, **characterised in that** there are a number of drive pressure cylinders (25, 30, 31) and the hydraulic part (52) is composed of a hydraulic section (53, 54, 55) assigned to a respective drive pressure cylinder (25, 30, 31), which are collectively connected to a pressure converter (52).

7. The bending machine according to Claim 6, **characterised in that** each hydraulic section (53, 54, 55) has a check valve and optionally also a throttle valve (65, 66, 67).

## Revendications

1. Machine de cintrage destinée à cintrer des pièces à usiner en matière thermoplastique, comprenant un dispositif de cintrage qui présente un dispositif de chauffage (18, 19) pour la plastification d'une ligne de cintrage sur la pièce à usiner et un entraînement pivotant (24) pouvant être relié à une source de pression pneumatique (45), destiné à faire pivoter une partie de la pièce à usiner autour de la ligne de cintrage, lequel présente au moins un cylindre de pression d'entraînement (25, 30, 31) muni d'une tige de piston (27, 34, 35) pouvant rentrer et sortir et d'un piston (36, 37, 38) qui y est fixé, lequel divise l'intérieur du cylindre de pression d'entraînement (25, 30, 31) en une première chambre de pression (39, 40, 41), lors de la mise sous pression de laquelle la tige de piston (27, 34, 35) est déplacée dans une direction pouvant causer une opération de cintrage, et en une deuxième chambre de pression (42, 43, 44), la mise sous pression de la première chambre de pression (39, 40, 41) pouvant être réalisée par pression pneumatique, et un dispositif de rappel pour le mouvement de la tige de piston (27, 34, 35) en direction inverse étant associé au cylindre de pression d'entraînement (25, 30, 31), **caractérisée en ce que** le cylindre de pression d'entraînement, respectivement les cylindres de pression d'entraînement (25, 30, 31), est réalisé, respectivement en tant que cylindre de pression d'entraînement (25, 30, 31) hydropneumatique, avec la première chambre de pression (39, 40, 41) étant prévue comme chambre de pression pneumatique et avec la deuxième chambre de pression (42, 43, 44) étant prévue comme chambre de pression hydraulique, et **en ce que** respectivement la chambre de pression pneumatique peut être reliée à la source de pression pneumatique (45) et **en ce qu'**une partie hydraulique (52) se raccorde à la chambre de pression hydraulique, respectivement aux chambres de pression hydraulique, laquelle lors de l'opération de cintrage, en raison de la mise sous pression de la chambre de pression pneumatique, respectivement des chambres de pression pneumatique, agit comme étrangleur hydraulique (65, 66, 67), la partie hydraulique (52) présentant au moins une vanne d'arrêt (62, 63, 64) commutable, à l'aide de laquelle l'écoulement de fluide hydraulique hors de la chambre de pression hydraulique, respectivement des chambres de pression hydraulique, peut être arrêté.

2. Machine de cintrage selon la revendication 1, **caractérisée en ce que** la partie hydraulique (52) présente en tant que dispositif de rappel au moins un convertisseur de moyen de pression (56) muni d'une chambre de pression hydraulique (59) reliée à la partie hydraulique (52) et d'une chambre de pression pneumatique (60) séparée par un piston (58), ou laquelle chambre de pression pneumatique peut être raccordée à la source de pression pneumatique (45) pour le rappel du cylindre de pression d'entraînement, respectivement des cylindres de pression d'entraînement (25, 30, 31).

3. Machine de cintrage selon la revendication 1 ou 2, **caractérisée en ce que** la partie hydraulique (52) présente au moins une soupape d'étranglement (65, 66, 67) par l'intermédiaire de laquelle l'effet d'étranglement est réglable.

4. Machine de cintrage selon la revendication 3, **caractérisée en ce que** la soupape d'étranglement est réalisée comme clapet anti-retour d'étranglement (65, 66, 67) qui est installée de manière à bloquer son clapet anti-retour (71, 72, 73) lors de l'opération de cintrage.

5. Machine de cintrage selon la revendication 3 ou 4, **caractérisée en ce que** la soupape d'étranglement (65, 66, 67) est disposée entre la chambre de pression hydraulique et la vanne d'arrêt (62, 63, 64).

6. Machine de cintrage selon l'une quelconque des revendications 1 à 5, **caractérisée en ce que** plusieurs cylindres de pression d'entraînement (25, 30, 31) sont présents et **en ce que** la partie hydraulique (52) est assemblée à partir d'une section de partie hydraulique (53, 54, 55) associée à respectivement un cylindre de pression d'entraînement (25, 30, 31), lesquelles sont raccordées en commun à un convertisseur de pression (52).

7. Machine de cintrage selon la revendication 6, **caractérisée en ce que** chaque section de partie hydraulique (53, 54, 55) présente une vanne d'arrêt, le cas échéant également une soupape d'étranglement (65, 66, 67).
